# EUROPÄISCHE PATENTSCHRIFT

(11) **EP 1 944 111 B1**
(45) Veröffentlichungstag und Bekanntmachung des Hinweises auf die Patenterteilung: **08.07.2009**
(21) Anmeldenummer: 07020366.6
(22) Anmeldetag: 18.10.2007
(51) Int. Cl.: B23D 45/04

(54) **Kappsäge**
Mitre saw
Scie à onglet

(30) Priorität: 18.12.2006 DE 102006059753
(43) Veröffentlichungstag der Anmeldung: 16.07.2008
(73) Patentinhaber: Festool GmbH, 73240 Wendlingen (DE)
(72) Erfinder: Albrecht, Hans-Peter, 73240 Wendlingen (DE); Kneip, Christian, 73230 Kirchheim (DE)
(74) Vertreter: Bregenzer, Michael

(56) Entgegenhaltungen:
- US-A- 5 524 516

## Beschreibung

Die Erfindung betrifft eine Kappsäge mit einer Sägeeinrichtung, die ein durch einen Antriebsmotor antreibbares Sägeblatt aufweist und zur Durchführung von Linearschnitten an einem Werkstück an einem Sägeschlitten angeordnet ist, wobei der Sägeschlitten an einer an einem Träger angeordneten Linearführung entlang einer Linearführungsachse linear geführt ist, und wobei die Sägeeinrichtung an dem Sägeschlitten um eine Kappschwenkachse um einen Kappschwenkwinkel schwenkbar gelagert ist.

Solche Kappsägen werden auch als Zug-Kappsägen bezeichnet. Durch die Kapp-Schwenkbewegung kann man eine Sägetiefe beim Sägen in das Werkstück beeinflussen. Mit Hilfe der Linearführung sind Linearschnitte möglich. Die Kappsäge hat üblicherweise einen Werkstücktisch zum Ablegen eines Werkstückes für die Sägebearbeitung. Damit der Werkstücktisch nicht beschädigt wird, beispielsweise weil das Sägeblatt in einen Sägeschlitz am Werkzeugtisch zu tief eintaucht, ist ein Kapptiefenanschlag vorgesehen, der den Kappschwenkwinkel begrenzt.

Die Sägeeinrichtung wird von oben in Richtung in Richtung des Werkstücktischs geschwenkt, um auf dem Werkstücktisch aufliegende Werkstücke in Horizontalrichtung zu durchsägen, wobei die Sägetiefe Sägeeinrichtung durch den Abstand der Nabe des Sägeblattes zu dessen Außenumfang definiert ist. Es können keine Werkstücke gesägt werden, die höher als der vertikale Abstand zwischen Nabe und Außenumfang des Sägeblattes sind.

Eine Kappsäge gemäß dem Oberbegriff von Anspruch 1 ist aus der US 5 524 516 bekannt.

Es ist daher die Aufgabe der vorliegenden Erfindung, eine Kappsäge mit verbesserter Nutzbarkeit bereitzustellen.

Zur Lösung der Aufgabe ist eine Kappsäge gemäß Anspruch 1 vorgesehen.

In Abhängigkeit von der jeweiligen Linearposition des Sägeschlittens ermöglicht die Kappeinstelleinrichtung unterschiedliche Kapptiefen. So ist es beispielsweise möglich, dass im Bereich eines Vertikalanschlages zum Anlegen des Werkstückes eine größere Kapptiefe einstellbar ist. An diesen Vertikalanschlag kann beispielsweise ein Werkstück angelegt werden, das höher ist als der vertikale Abstand zwischen Nabe und Außenumfang des Sägeblattes. Somit ist es auch möglich, beispielsweise durch Schrägstellen des Vertikalanschlages Gehrungsschnitte an verhältnismäßig hohen Werkstücken durchzuführen.

Die Linearführungsachse ist beispielsweise eine Zugachse der Kappsäge, die eine Zug-Kappsäge ist.

Durch die Kappeinstelleinrichtung ist gewährleistet, dass ein Sägetisch nicht beschädigt wird. Die Kappeinstelleinrichtung stellt sicher, dass nur ein solcher Kappschwenkwinkel zugelassen wird, bei dem der Sägetisch, beispielsweise einen Sägeschlitz am Sägetisch, nicht beschädigt wird.

Im Bereich des Vertikalanschlages zum Anlegen des Werkstückes lässt die Kappeinstelleinrichtung einen größeren Kappschwenkwinkel zu als bei einer von dem Vertikalanschlag entfernten Stellung des Sägeschlittens. Der Vertikalanschlag befindet sich beispielsweise in der Nähe des Trägers für die Linearführung. Ein Werkstück, beispielsweise ein Kantholz, ein Kranzprofil, Profile, insbesondere sogenannte Crown-Moulding-Profile, oder dergleichen, kann von vorn an den Vertikalanschlag angelegt werden. Eine Winkelstellung des Vertikalanschlages ist zweckmäßigerweise einstellbar. Beispielsweise kann der Träger für die Sägeeinrichtung relativ zum Vertikalanschlag gedreht oder geschwenkt werden. Es ist aber auch denkbar, dass der Werkstücktisch den Vertikalanschlag enthält und insgesamt, das heißt zusammen mit dem Vertikalanschlag, drehbar ist. Der Werkstücktisch und/oder der Vertikalanschlag sind zweckmäßigerweise um eine Vertikalachse oder Y-Achse drehbar.

Der Träger für die Linearführung wird zweckmäßigerweise durch einen Schwenkträger gebildet, der an einer Schrägschwenkbasis um eine Schrägschwenkachse schrägschwenkbar ist. Die Schrägschwenkachse verläuft horizontal, z.B. in z-Richtung. Die Schrägschwenkbasis kann beispielsweise an dem Werkstücktisch angeordnet sein oder den Werkstücktisch umfassen. Die Schrägschwenkachse und die Linearführungsachse sind vorteilhaft parallel. Mit der schrägschwenkbaren Sägeeinrichtung können schräge Schnitte und auch vorteilhaft zu einer Gehrungsschräge schräge Schnitte durchgeführt werden.

Vorteilhaft ist vorgesehen, dass die Kappeinstelleinrichtung den Kappschwenkwinkel in Abhängigkeit von der Schrägschwenkstellung der Sägeeinrichtung begrenzt. So ermöglicht die Kappeinstelleinrichtung vorteilhaft nur dann den größeren Kappschwenkwinkel, wenn die Sägeeinrichtung exakt vertikal steht oder zumindest im Bereich ihrer Vertikalstellung ist. Bei der Vertikalstellung steht das Sägeblatt rechtwinklig zu einer Auflagefläche der Kappsäge, z.B. dem Werkstücktisch. Wenn ein Sägeschlitz am Werkstücktisch entsprechend breit ist, zumindest in einem Bereich unterhalb seiner Schlitzöffnung an der Auflagefläche des Werkstücktisches, ist es auch denkbar, dass die Kappeinstelleinrichtung bei Schrägschwenkstellungen der Sägeeinrichtung eine größere Kapptiefe zulässt.

Die Kappeinstelleinrichtung enthält zweckmäßigerweise eine Linearbegrenzungseinrichtung, die zwischen einer Linearfreigabestellung und einer Linearbegrenzungsstellung verstellbar ist. In der Linearbegrenzungsstellung begrenzt die Linearbegrenzungseinrichtung eine Linearverstellung des Sägeschlittens entlang der Linearführungsachse.

Die Linearbegrenzungseinrichtung begrenzt beispielsweise ein Verstellen des Sägeschlittens auf eine maximal von dem Werkstück-Vertikalanschlag entfernte Linearposition. Auch eine minimal von dem Werkstück-Vertikalanschlag entfernte Linearposition kann von der Linearbegrenzungseinrichtung begrenzt werden. So ist beispielsweise ein Verfahren bzw. Ziehen des Sägeschlittens zwischen der minimalen und der maximalen Linearposition möglich.

Es ist bevorzugt, dass die Linearbegrenzungseinrichtung den Sägeschlitten exakt auf mindestens eine Linearlängsposition festlegt. Beispielsweise ist die Linearbegrenzungseinrichtung mit dem Sägeschlitten verbindbar und von dem Sägeschlitten lösbar. In der verbundenen Stellung ist die Längsposition des Sägeschlittens entlang der Linearführung festgelegt. Auch eine Rastanordnung zum Verrasten des Sägeschlittens an der mindestens einen Längsposition ist als Linearbegrenzungseinrichtung möglich.

Die Linearbegrenzungseinrichtung hat vorzugsweise einen hakenartigen Vorsprung zum Verbinden mit dem Sägeschlitten. Beispielsweise bildet die Linearbegrenzungseinrichtung eine Art Fanghaken.

Die Linearbegrenzungseinrichtung kann am Sägeschlitten oder einer bezüglich des Sägeschlittens ortsfesten Basis beweglich angeordnet sein. Die Linearbegrenzungseinrichtung kann zum Verbinden mit dem Sägeschlitten beispielsweise linear verschoben und/oder geschwenkt werden.

Vorteilhaft ist vorgesehen, dass die Linearbegrenzungseinrichtung in Abhängigkeit von einer Schrägschwenkposition der Sägeeinrichtung mit dem Sägeschlitten verbindbar ist oder nicht. Beispielsweise ist die Linearbegrenzungseinrichtung nur im Bereich einer Vertikalstellung der Sägeeinrichtung mit dem Sägeschlitten verbindbar.

An der Linearbegrenzungseinrichtung kann eine Kappanschlagfläche angeordnet sein, gegen die ein Anschlag der Sägeeinrichtung beim Schwenken in Richtung einer Kappstellung anschlägt.

Die Kappeinstelleinrichtung weist zur Begrenzung des Kappschwenkwinkels zweckmäßigerweise einen von der Linearbegrenzungseinrichtung separaten Kappanschlag auf, gegen den ein Anschlag der Sägeeinrichtung beim Schwenken in Richtung der Kappstellung anschlägt. Der Kappanschlag, z.B. ein Kappanschlagteil, ist zumindest zwischen einer ersten, einen kleineren Kappschwenkwinkel zulassenden Begrenzungsstellung und einer zweiten, einen größeren Kappschwenkwinkel zulassenden Begrenzungsstellung verstellbar. Beispielsweise ist der Kappanschlag linear beweglich und/oder schwenkbar.

Der Kappanschlag, z.B. das Kappanschlagteil, und die Linearbegrenzungseinrichtung sind zweckmäßigerweise sich wechselseitig beeinflussend verstellbar. Beispielsweise kann die Linearbegrenzungseinrichtung nur dann verstellt werden, wenn der Kappanschlag in einer vorbestimmten Stellung ist und umgekehrt. Der Kappanschlag ist beispielsweise nur dann in die zweite, einen größeren Kappschwenkwinkel zulassenden Begrenzungsstellung verstellbar, wenn die Linearbegrenzungseinrichtung eine Linearverstellung des Sägeschlittens auf die Längsposition begrenzt, beispielsweise weil sie mit dem Sägeschlitten verbunden ist. Umgekehrt ist die Linearbegrenzungseinrichtung zweckmäßigerweise nur dann mit dem Sägeschlitten verbindbar, wenn der Kappanschlag in die zweite, einen größeren Kappschwenkwinkel zulassende Begrenzungsstellung verstellt ist.

Vorteilhaft ist die Linearbegrenzungseinrichtung mit einer Blockieranordnung gekoppelt, die in einer Schrägschwenk-Blockierstellung die Sägeeinrichtung in einer vorbestimmten Schrägschwenkposition blockiert. In einer Schrägschwenk-Freigabestellung ermöglich die Blockieranordnung ein Schwenken der Sägeeinrichtung. Die Linearbegrenzungseinrichtung und die Blockieranordnung können beispielsweise bewegungsgekoppelt sein. Die Blockieranordnung legt die Sägeeinrichtung vorteilhaft im Bereich ihrer vertikalen Schrägschwenkposition fest, wenn die Linearbegrenzungseinrichtung in ihrer eine Linearverstellung des Sägeschlittens begrenzende Linearbegrenzungsstellung ist. Aber auch das Umgekehrte kann der Fall sein, nämlich dass die Blockieranordnung ein Verstellen der Linearbegrenzungseinrichtung in die Linearbegrenzungsstellung nur dann zulässt, wenn sie in ihrer Schrägschwenk-Blockierstellung ist und ein Schrägschwenken der Sägeeinrichtung blockiert.

Die Blockieranordnung ist mit dem Kappanschlag vorteilhaft derart gekoppelt, dass der Kappanschlag nur dann in die zweite, einen größeren Kappschwenkwinkel zulassende Begrenzungsstellung verstellbar ist, wenn die Linearbegrenzungseinrichtung eine Linearverstellung des Sägeschlittens auf die Längsposition begrenzt. Die Kopplung kann beispielsweise durch die Linearbegrenzungseinrichtung realisiert sein. Es ist auch denkbar, dass eine weitere Einrichtung die Komponenten Blokkieranordnung, Linearbegrenzungseinrichtung und Kappanschlag in der vorgenannten Weise miteinander koppelt und/oder dass der Kappanschlag nicht über die Linearbegrenzungseinrichtung, sondern unmittelbar mit der Blockieranordnung zusammenwirkt.

Die Linearbegrenzungseinrichtung betätigt vorteilhaft bei einem Verstellen in ihre Linearbegrenzungsstellung die Blokkieranordnung in Richtung ihrer Schrägschwenk-Blockierstellung. Die Blockieranordnung ist vorteilhaft in Richtung der Schrägschwenk-Freigabestellung federbeaufschlagt, so dass sie sich selbsttätig in die Schrägschwenk-Freigabestellung zurückverstellt. Es ist aber auch denkbar, dass die Linearbegrenzungseinrichtung die Blockiereinrichtung in Richtung der Schrägschwenk-Freigabestellung mitnimmt. Eine Federanordnung ist dann zwar möglich, aber nicht unbedingt notwendig.

Die Blockieranordnung umfasst beispielsweise einen Bolzen, der vorteilhaft federbeaufschlagt ist. Der Bolzen greift beispielsweise in eine oder mehrere Ausnehmungen der Schrägstellbasis ein. Die Ausnehmung, z.B. eine Bohrung, kann beispielsweise im Bereich der Vertikalstellung der Sägeeinrichtung vorgesehen sein. Es ist aber auch möglich, dass beispielsweise ein Langloch, auch ein bogenförmiges Langloch, an der Schrägstellbasis vorgesehen ist, so dass auch in einem Schrägstellungsbereich der Sägeeinrichtung, d.h. bei schrägen Stellungen neben der Vertikalstellung, eine größere Kapptiefe oder ein größerer Kappschwenkwinkel zugelassen wird.

Die Kappsäge hat vorteilhaft einen Werkstücktisch mit einem Sägeschlitz zum Auflegen des Werkstücks. Eine Tiefe oder eine Breite des Sägeschlitzes korreliert mit dem durch die Kappeinstelleinrichtung einstellbaren maximalen Kappschwenkwinkel. Beispielsweise ist der Sägeschlitz bei einer Längsposition der Linearführung tiefer und optional auch breiter, bei der eine größere Kapptiefe oder ein größerer Kappschwenkwinkel zugelassen wird.

Der Werkstücktisch und der Schwenkträger für die Sägeeinrichtung bilden vorteilhaft eine Baueinheit, so dass bei einem Drehen des Werkstücktisches der Schwenkträger ebenfalls gedreht wird. Die Drehpositionen von Sägeschlitz und Sägeblatt bleiben damit gleich.

Nachfolgend werden Ausführungsbeispiele der Erfindung anhand der Zeichnung erläutert. Es zeigen:
- Figur 1: eine teilweise geschnittene Seitenansicht einer Kappsäge in einer Kappstellung mit erfindungsgemäß größerem Kappschwenkwinkel,
- Figur 2: die Kappsäge gemäß Figur 1 in "normal" tiefer Kappschwenkstellung,
- Figur 3: eine perspektivische Vorderansicht der Kappsäge gemäß Figuren 1, 2 mit einer schräggeschwenkten Sägeeinrichtung,
- Figur 4: eine teilweise geschnittene Seitenansicht der Kappsäge gemäß Figur 1 von der zur Zeichenebene entgegengesetzten Seite her, etwa entsprechend einem Ausschnitt A in Figur 1,
- Figur 5: eine Schnittansicht etwas größer als der Ausschnitt A in Figur 1 und wie in Figur 1 von vorn auf die Zeichenebene,
- Figur 6: eine schematische Perspektivansicht einer Kappsäge, deren Sägeeinrichtung in einer erfindungsgemäß tieferen Kappstellung ist, und
- Figur 7: die Kappsäge gemäß Figur 6 in einer "normal" tiefen Kappstellung.

Eine Säge 10 hat eine Sägeeinrichtung 11 mit einem drehbar gelagerten Kreis-Sägeblatt 12, das durch einen Antriebsmotor 13 antreibbar ist. Somit bildet die Säge 10 eine Werkzeugmaschine 14 zur trennenden Bearbeitung eines Werkstücks 15. Die Sägeeinrichtung 11 ist zum Sägen des Werkstücks 15 in mehreren Freiheitsgraden beweglich: die Sägeeinrichtung 11 ist um eine vertikale, das heißt in y-Richtung verlaufende Drehachse 17 drehbar, um eine horizontale, in z-Richtung verlaufende Schrägschwenkachse 18 in verschiedene Schrägschwenkpositionen schrägversschwenkbar, um eine Kappschwenkachse 19 schwenkbar und zudem noch parallel zur Schrägschwenkachse 18 an einer Linearführung 20, d.h. in z-Richtung, linear verstellbar.

Durch Drehen bzw. Schwenken der Sägeeinrichtung 11 um die Drehachse 17 bezüglich eines Vertikalanschlages 16 können Gehrungsschnitte durchgeführt werden. Somit erfüllt die Säge 10 die Funktion einer Gehrungssäge. Die Möglichkeit, die Sägeeinrichtung 11 um die Kappschwenkachse 19 zu schwenken, macht die Säge 10 zu einer Kappsäge. Der Linearfreiheitsgrad, die Sägeeinrichtung 11 an der Linearführung 20 entlang einer Linearführungsachse 21 linear hin und her zu bewegen bzw. zu ziehen, kennzeichnet die Säge 10 als eine Zug-Säge und im Zusammenhang mit dem Kappschwenken als Zug-Kappsäge. Durch Schrägschwenken der Sägeeinrichtung 11 um die Schrägschwenkachse 18 sind schräge Schnitte möglich.

Ein Maschinenbett 22 der Säge 10 bildet eine Schwenkbasis 23 für ein Schwenkteil 24, das um die Drehachse 17, die insoweit eine Schwenkachse bildet, drehbar an der Schwenkbasis 23 gelagert ist. Das Maschinenbett 22 ist mit Füßen 25 auf einem Untergrund abstellbar. An den Füßen 25 können Befestigungseinrichtungen vorgesehen sein, beispielsweise Höhenverstelleinrichtungen und/oder Schrauböffnungen zum Anschrauben an dem Untergrund.

Ein im Wesentlichen zylindrischer Werktisch-Körper 26 des Schwenkteils 24 ist zwischen Werkstücktisch-Vorsprüngen drehbar aufgenommen, die vor ein Bodenteil 28 der Schwenkbasis 23 seitlich nach oben vorstehen. Oberseiten des Körpers 26 und der Vorsprünge 27 bilden eine Auflagefläche 29 eines Werkstücktischs 30 zum Auflegen des Werkstücks 15.

Radial innere Vorderseiten der Vorsprünge 27 sind korrespondierend mit dem runden Außenumfang des Körpers 26 rund. Vertikale Seitenflächen 31 der Vorsprünge 27 bilden Schwenkanschläge für einen Betätigungsarm 32 des Schwenkteils 24, der nach radial außen vor den Körper 26 vorsteht. Ein Sägeschlitz 33 erstreckt sich an Auflagefläche 29 des Körpers 26 etwa von der Drehachse 17 bis zum radial äußeren, freien Ende des Betätigungsarms 32. Auch die Oberseite des Betätigungsarms 32 bildet eine Auflagefläche des Werkstücktisches 30.

An der Oberseite der Vorsprünge 27 ist ein Anschlagteil 34 angeordnet, an dem Anschlagplatten 35 zur Bildung des Vertikalanschlages 16 befestigbar sind. Zwischen den Anschlagplatten 35 ist ein Freiraum vorhanden.

Das Schwenkteil 24 ist bezüglich der Drehachse 17 mit Hilfe einer Rasteinrichtung 36 oder einer Klemmeinrichtung 37 drehfest festlegbar. Die Rasteinrichtung 36 verrastet mit einer Rastbasis 38 an Rastpositionen. Die Klemmeinrichtung 37 ist an einer Klemmbasis 39 auch zwischen den Rastpositionen festlegbar.

Ein Bogenteil 40, das an einer Vorderseite des Bodenteils 28 angeordnet ist, bildet die Rastbasis 38 und die Klemmbasis 39. An einer Oberseite des Bogenteils 40 ist eine Schwenkwinkelskala 41 angeordnet.

Eine Rast-Betätigungshandhabe 42 und eine Klemm-Betätigungshandhabe 43 stehen nach radial außen vor den Betätigungsarm 32 einer Rast-Betätigungseinrichtung 44 und einer Klemm-Betätigungseinrichtung 45 vor. Zumindest die Klemm-Betätigungshandhabe 43 bildet eine Bedienhandhabe zum Schwenken des Schwenkteils 24. Mit den Betätigungseinrichtungen 44, 45 können die Rasteinrichtung 36 und die Klemmeinrichtung 37 zwischen einer das Schwenkteil an der Schwenkbasis 23 drehfest haltenden Haltestellung und einer ein Schwenken ermöglichenden Freigabestellung verstellt werden.

Die Betätigungshandhaben 42, 43 sind unmittelbar nebeneinander angeordnet. Somit kann mit einer Hand die Klemm-Betätigungseinrichtung zwischen einer Klemmfreigabestellung und einer Klemmstellung verstellt werden, während dieselbe Hand die Rast-Betätigungseinrichtung in der Rastfreigabestellung hält, so das die Rasteinrichtung 36 nicht mit der Rastbasis 38 verrastet. Ein Schwenkwinkel ist somit frei wählbar, auch zwischen Rastpositionen der Rasteinrichtung.

An der dem Betätigungsarm 32 entgegengesetzten Seite des Schwenkteils 24 ist eine Schrägschwenkbasis 46 mit einem Schwenklager 47 angeordnet, an dem ein Schräg-Schwenkträger 48 um die Schrägschwenkachse 18 schwenkbar gelagert ist. Von einem radial vor den Werkstücktisch-Körper 26 vorstehenden Tragarm 49 steht ein Lagergehäuse 50 nach oben ab. An der bogenförmigen Oberseite des Lagergehäuses 50 verläuft eine bogenförmige Zahnung 51. Neben der Zahnung 51 ist eine Stufenscheibe 52 positioniert, die ebenfalls eine bogenförmige obere Stirnseite hat. An der Vorderseite der Stufenscheibe 52 ist eine Schrägschwenkwinkelskala 53 zur Anzeige des jeweiligen Schrägschwenkwinkels des Schwenkträgers 48 angeordnet.

Die Zahnung 51 bildet einen Bestandteil eines Schrägschwenkgetriebes 54, mit dem eine jeweilige Schrägschwenkposition des Schwenkträgers 48 und somit der an diesem angeordneten Sägeeinrichtung 11 einstellbar ist. Das Schrägschwenkgetriebe 54 ist in einem Schwenkträgergehäuse 55 des Schwenkträgers 48 angeordnet.

Führungsrohre 56 stehen horizontal vor den Schwenkträger 48 vor. Die Führungsrohre 56 sind Linearführungselemente 57 der Linearführung 20. Ein Sägeschlitten 58 ist an den Linearführungselementen 57 linear geführt. Beispielsweise durchdringen die Führungsrohre 56 Führungsbuchsen 59 des Sägeschlittens 58.

Die Sägeeinrichtung 11 ist an einem Kapp-Schwenklager 60 an dem Sägeschlitten 58 um die Kappschwenkachse 19 schwenkbar gelagert. Die Sägeeinrichtung 11 kann von einem Bediener an einem Handgriff 61 an ihrem Gehäuse 62 ergriffen werden und um die Kappschwenkachse 19 geschwenkt oder entlang der Linearführungsachse 21 gezogen werden. In dem Gehäuse 62 ist der Antriebsmotor 13 aufgenommen. Ferner ist an dem Gehäuse 62 ein Sägeschutz 63 schwenkbar gelagert, der vor Verletzungen durch das Sägeblatt 12 schützt, beim Sägen jedoch in das Gehäuse 62 einschwenkt und das Sägeblatt 12 freigibt. An einem Absauganschluss 64 kann beim Sägen auftretender Staub abgesaugt werden.

Das Schrägschwenkgetriebe 54 ist von der Vorderseite der Säge 10 her bedienbar. Eine zum Schrägschwenkgetriebe 54 führende Welle 65 einer Betätigungseinrichtung 66 des Schrägschwenkgetriebes 54 ist in einem Innenraum des in der Zeichnung rechten Führungsrohrs 56 angeordnet. Ein Handgriff 67 steht vor das vordere, freie Ende des Führungsrohres 56 vor und kann bequem von einem Bediener ergriffen und gedreht werden. Entsprechend dem Drehsinn beim Drehen des Handgriffes 67 schwenkt das Schrägschwenkgetriebe 54 den Schwenkträger 48 um die Schrägschwenkachse 18.

Eine Schürze 100 ist an der der Schrägschwenkbasis 46 zugewandten Seite des Gehäuses 62 angeordnet. Die Schürze 100 fängt Späne ab, die vom Sägeblatt 12 nach hinten geschleudert werden und unterstützt die Staubabsaugung. Die Schürze 100 ist zweckmäßigerweise elastisch, so dass sie nachgebend auf dem Werkstücktisch 30 aufliegen kann, wenn die Sägeeinrichtung 11 um die Kappschwenkachse 19 nach oben geschwenkt ist.

Die Kapptiefe bzw. der Kappschwenkwinkel der Kappsäge 10 ist in Abhängigkeit von einer Längsposition des Sägeschlittens 58 an der Linearführung 20 variabel einstellbar.

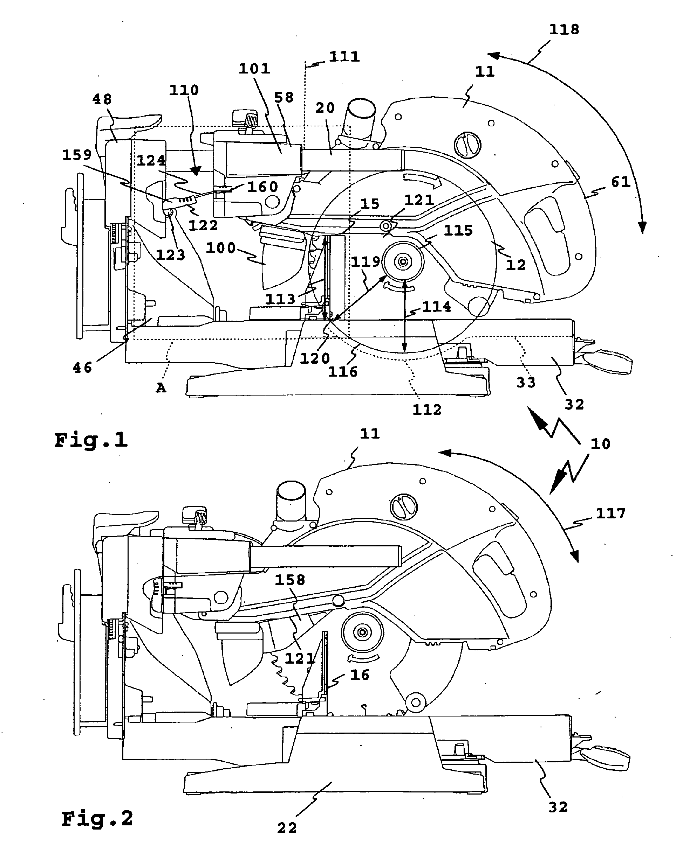

Die Kappeinstelleinrichtung 110 lässt in einer in Figur 1 dargestellten Linearposition 111 des Sägeschlittens 58 eine größere Kappschwenktiefe zu als bei Linearpositionen neben der Linearposition 111 (Figur 2). In einem der Linearposition 111 zugeordneten Abschnitt 112 ist der Sägeschlitz 33 tiefer als abseits davon, beispielsweise im Bereich des Betätigungsarmes 32. Am Abschnitt 112 ist der Sägeschlitz 33 zweckmäßigerweise kreisrund vertieft.

In der in Figur 1 dargestellten tieferen Kappposition kann ein verhältnismäßig hohes Werkstück, das am Vertikalanschlag 16 anliegt, gesägt werden. In Figur 1 hat das Werkstück 15 beispielsweise eine vertikale Höhe 113, die größer ist als ein Vertikalabstand 114 zwischen einer Nabe 115 und einem Außenumfang 116 des Sägeblatts 12. In der um einen ersten Kappschwenkwinkel 117 geschwenkten Kappposition gemäß Figur 2 wäre das Werkstück 15 nicht sägbar, da der Abstand zwischen der Nabe 115 und dem Außenumfang 116 nicht ausreicht.

Durch die erfindungsgemäß tiefere Kappstellung der Sägeeinrichtung 11 bei der Linearposition 111 ist es aber möglich, das Werkstück 15 zu sägen, wenn es am Vertikalanschlag 16 anliegt. In der um einen zweiten, größeren Kappschwenkwinkel 118 geschwenkten Kappposition gemäß Figur 1 wird ein Schrägabstand 119 zwischen der Nabe 115 und dem Außenumfang 116 des Sägeblatts 12 optimal genutzt. Der Außenumfang 116 des Sägeblatts 12 reicht in der Linearposition 111 bis in einen Eckbereich 120 zwischen dem Vertikalanschlag 16 und der Horizontal-Auflagefläche 29. Der Schrägabstand 119 ist die Distanz zwischen der Nabe 115 und dem Eckbereich 120. Das Sägeblatt 12 reicht zumindest soweit in den Eckbereich 120 hinein, dass das Werkstück 15 vollständig durchtrennt werden kann.

Korrespondierend mit dem Vertikalanschlag 16 hat das Gehäuse 62 eine Aussparung 121. Die Aussparung 121 erstreckt sich etwa vom Bereich der Nabe 115 nach vertikal hinten. Im hinteren Bereich der Aussparung 121 ist die Schürze 100 angeordnet. Durch die Aussparung 121 ist es möglich, die zusätzliche Kapptiefe beim zweiten Kappschwenkwinkel 118 einzustellen, ohne dass das Gehäuse 62 an dem am Vertikalanschlag 16 anliegenden Werkstück 15 anstößt.

Ferner ist im Bereich der Aussparung 121 ein bewegliches Gehäuseteil 158 des Gehäuses 62 angeordnet. Das Gehäuseteil 158 ist haubenartig. Das Gehäuseteil 158 kann zum Sägen von am Vertikalanschlag 16 anliegenden Werkstücken wegschwenken, z.B. in einen Innenraum des Gehäuses 62 hinein. Somit ist ein Freiraum für am Vertikalanschlag 16 anliegende das Werkstück 15 vorhanden.

Bei der Kappsäge 10 ist der Träger für die Linearführung 20 ein schräg schwenkbarer Träger, nämlich der Schwenkträger 48. Prinzipiell wäre es auch denkbar, einen feststehenden, beispielsweise vertikal stehenden Träger vorzusehen.

Die Linearposition 111 ist sozusagen eine optimale Position, bei der der Schrägabstand 119 zwischen der Nabe 115 und dem Eckbereich 120 optimal ausgenutzt ist. Eine Linearbegrenzungseinrichtung 122 hält den Sägeschlitten 58 in der Linearposition 111. Die Linearbegrenzungseinrichtung 122 enthält ein an einem Schwenklager 123 schwenkbar gelagertes Distanzelement 124. Die Grundfunktion des Distanzelements 124 ist, einen Linearabstand zwischen dem Sägeschlitten 58 und einem bezüglich der Linearführung 20 ortsfesten Halteelement festzulegen. Das ortsfeste Halteelement ist vorliegend die Basis für die Linearführung 20, nämlich der Schwenkträger 48.

Das Schwenklager 123 ist am Schwenkträger 48 angeordnet. Das Distanzelement 124 kann vom Schwenkträger 48 weg in Richtung des Sägeschlittens 58 geschwenkt werden. Am dem Sägeschlitten 58 zugewandten Endbereich hat das Distanzelement 124 Befestigungsmittel zum Verbinden mit dem Sägeschlitten 58. Die Befestigungsmittel enthalten einen Haken 125, der mit einer Hakenaufnahme 126 am Sägeschlitten 58 verhakt werden kann. Dann sind die Linearbegrenzungseinrichtung 122 und der Sägeschlitten 58 miteinander verbunden, so dass der Sägeschlitten 58 in der Linearposition 111 festgelegt ist.

In dieser Linearposition 111 lässt ein Kappanschlag 127 den zweiten, größeren Kappschwenkwinkel zu. Der Kappanschlag 127 ist am Sägeschlitten 58, ein Anschlag 130, der beim Kippen um die Kappschwenkachse 19 gegen den Kappanschlag 127 anschlägt, an der kapp-schwenkbaren Sägeeinrichtung 11 angeordnet.

Der Kappanschlag 127 ist an einem beweglichen Kappanschlagteil 128 angeordnet. Das Kappanschlagteil 128 ist mit einer Schwenkwelle 129 an einem Gehäuse 101 des Sägeschlittens schwenkbar gelagert. Die Schwenkwelle 129 verläuft beispielsweise vertikal. Arme 128a, 128b des Kappanschlagteils 128 stehen horizontal vor die Schwenkwelle 129 vor.

Das Kappanschlagteil 128 ist zwischen einer ersten, den kleineren Kappschwenkwinkel 117 zulassenden Stellung und einer zweiten, den größeren Kappschwenkwinkel 118 zulassenden Begrenzungsstellung schwenkbar, wodurch bezüglich der Kappschwenkachse 19 drehfeste Kapp-Anschlagbereiche 131, 132 in den Schwenkweg des um die Kappschwenkachse 19 schwenkbaren Anschlags 130 gelangen. In der dem kleineren Kappschwenkwinkel 117 zugeordneten Begrenzungsstellung schlägt der Anschlag 130 der Sägeeinrichtung 11 gegen einen Anschlagbereich 131 des Kappanschlags 127. In der dem zweiten Kappschwenkwinkel 118 zugeordneten Begrenzungsstellung schlägt der Anschlag 130 gegen einen Anschlagbereich 132.

Der Anschlag 130 ist an einem nasenartigen Vorsprung 133 eines Vorsprungteils 147 der Sägeeinrichtung 11 angeordnet. Das Vorsprungteil 147 schwenkt mit der Sägeeinrichtung 11 um das Kapp-Schwenklager 60. Der Anschlag 130 schlägt von unten her gegen die Anschlagflächen oder -bereiche 131, 132. Damit der Anschlagbereich 132 den größeren Kappschwenkwinkel 118 zulässt, liegt er horizontal höher als der Anschlagbereich 131.

Die Kappschwenkachse 19 liegt zwischen der Nabe 115 und dem Vorsprung 133, so dass dieser von unten her gegen die Anschlagbereiche 131, 132 anschlägt. Der Anschlagbereich 131 für den kleineren Kappschwenkwinkel 117 ist an einem freien Endbereich 134 angeordnet, der in den Schwenkweg des Vorsprungs 133 geschwenkt ist, wenn das Kappanschlagteil 128 in seiner den kleineren Kappschwenkwinkel 17 zulassenden Begrenzungsstellung steht.

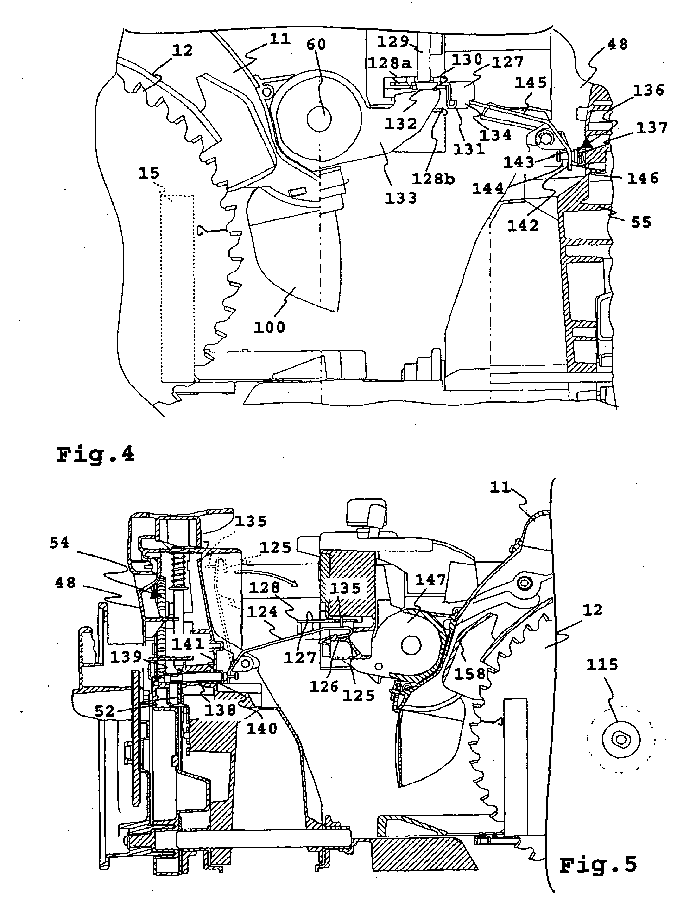

Das Kappanschlagteil 128 und die Linearbegrenzungseinrichtung 122 beeinflussen sich wechselseitig. Das Kappanschlagteil 128 kann beispielsweise nicht aus seiner den zweiten, größeren Kappschwenkwinkel 118 zulassenden Position herausgeschwenkt werden, wenn das Distanzelement 124 mit dem Sägeschlitten 58 verbunden ist. Dann steht ein Vorsprung 135 in den Schwenkweg des Kappanschlagteils 128 vor, so dass dieses nicht geschwenkt werden kann. Andererseits kann das Distanzelement 124 nur dann in die Hakenaufnahme 126 eingehakt werden, wenn das Kappanschlagteil 128 in der in den Figuren 4 und 5 dargestellten Begrenzungsstellung steht, bei der die Kappeinstelleinrichtung 110 den größeren Kappschwenkwinkel 118 zulässt.

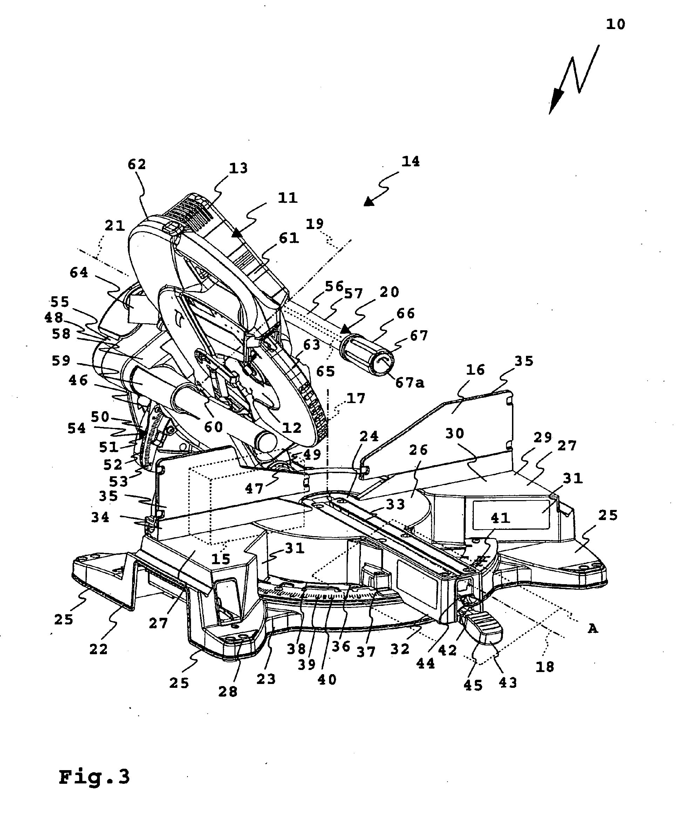

Weiterhin besteht eine Wechselwirkung zwischen der Schrägschwenkposition des Schwenkträgers 48 und somit der Sägeeinrichtung 11 und der Kappeinstelleinrichtung 110: nur wenn die Sägeeinrichtung 11 in ihrer vertikalen Position steht (Figur 1) lässt die Kappeinstelleinrichtung ein Schwenken der Sägeeinrichtung 11 um den größeren Kappschwenkwinkel 118 zu. Bei Schrägstellungen der Sägeeinrichtung 11 (siehe Figur 3) ist der tiefere Kappschwenkwinkel 118 nicht einstellbar. Prinzipiell wäre dies zwar möglich, beispielsweise wenn ein unterhalb der Eintrittsöffnung des Sägeschlitzes 33 befindlicher Bereich des Sägeschlitzes 33 entsprechend breit wäre. Bei der Kappsäge 10 ist dies jedoch nicht der Fall. Eine Blockieranordnung 136 verhindert, dass Schrägschwenkpositionen der Sägeeinrichtung 11 möglich sind, bei denen das Sägeblatt 12 den Sägeschlitz 33 beschädigen würde.

Die Blockieranordnung 136 enthält ein Blockierelement 137, das zwischen einer Schrägschwenk-Blockierstellung und einer Schrägschwenk-Freigabestellung verstellbar ist. Das Blockierelement umfasst beispielsweise einen Bolzen, der linear verschiebbar am Schwenkträger 48 gelagert ist. In seiner Blokkierstellung greift das Blockierelement 137 in eine Blockieraufnahme 139 an der Schrägschwenkbasis 46 ein. Die Blockieraufnahme 139 ist beispielsweise an der Stufenscheibe 52 angeordnet. Die Blockieraufnahme 139 korrespondiert mit der Vertikalstellung des Schwenkträgers 48. Nur wenn der Schwenkträger 48 vertikal steht, kann das Blockierelement 137 in die Blockieraufnahme 139 eindringen. Dann legt das Blockierelement 137 den Schwenkträger 48 bezüglich der Schrägschwenkbasis 46 in der vertikalen Schrägschwenkposition fest.

Das Blockierelement 137 ist in Richtung seiner Schrägschwenk-Freigabestellung federbeaufschlagt. Eine Feder 140 stützt sich am Schwenkträgergehäuse 55 sowie an einem Kragen 141 des Blockierbolzens 138 ab.

Die Blockieranordnung 136 und die Linearbegrenzungseinrichtung 122 sind bewegungsgekoppelt. Ein Mitnehmer 142 am Distanzelement 124 nimmt das Blockierelement 137 in seiner Blockierstellung mit. Ein gabelartiges Ende 149 des Mitnehmers 142 umgreift das Blockierelement 137 an einem Bund 144.

Bei Vertikalstellung des Schwenkträgers 48 fluchtet der Blokkierbolzen 138 mit der Blockieraufnahme 139. Das Distanzelement 124 kann dann in Richtung der Hakenaufnahme 126 verschwenkt werden und den Blockierbolzen 138 dabei in Richtung der Blockieraufnahme 139 verschieben. Abseits der Vertikalstellung des Schwenkträgers 48 jedoch ist ein lineares Verstellen des Blockierelementes 137 nicht möglich. Der Blokkierbolzen 138 gleitet dann auf der Stufenscheibe 152 entlang und verhindert ein Schwenken des Distanzelements 124. Der Mitnehmer 142 und der Haken 125 sind aneinander entgegengesetzten Enden des Distanzelementes 124 angeordnet. Zwischen diesen Enden befindet sich das Schwenklager 123.

Das Distanzelement 124 und das Kappanschlagteil 128 sind z.B. Kunststoff- oder Stanz-Biegeteile.

Die Arme 145, 146 des Distanzelementes 124 sind winkelig zueinander. Am Arm 145 ist der Haken 125, am Arm 146 der Mitnehmer 142 angeordnet.

Am Distanzelement 124 und an dem Kappanschlagteil 128 können Griffe 159, 160, z.B. aus Kunststoff, zum bequemen Betätigen vorhanden sein.

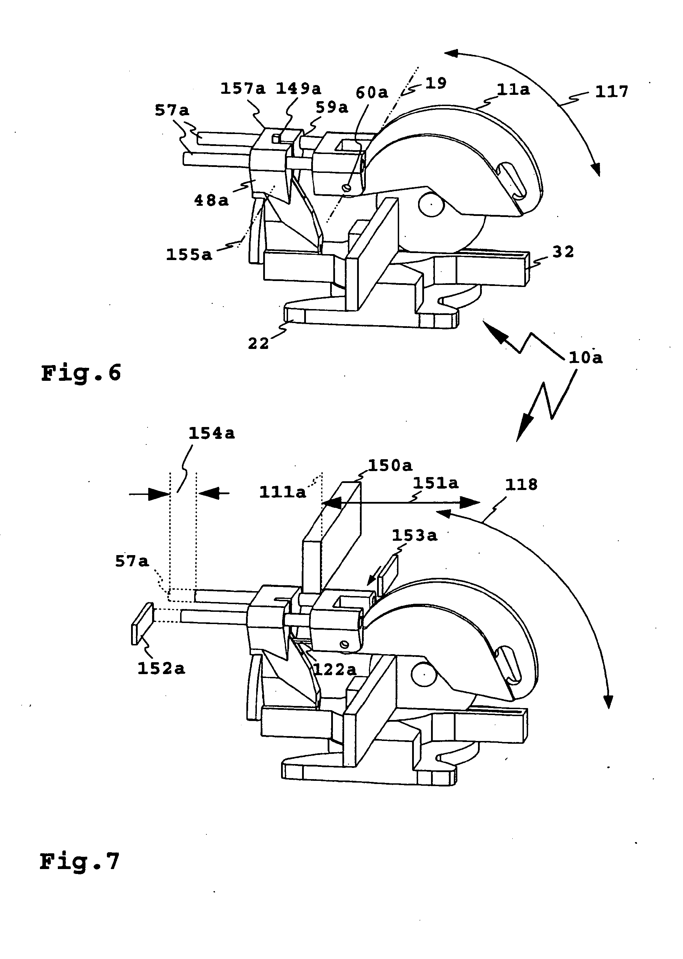

Bei einer in den Figuren 6 und 7 dargestellten Kappsäge 10a ist das erfindungsgemäße Prinzip schematisch dargestellt. Die Kappsäge 10a weist teilweise gleiche Komponenten wie die Kappsäge 10 auf. Gleiche oder gleichartige Komponenten sind mit denselben Bezugszeichen versehen, wobei teilweise mit einem Index "a" abweichende Komponenten der Kappsäge 10a verdeutlicht sind.

So hat die Kappsäge 10a beispielsweise einen Schwenkträger 48a mit Führungsbuchsen 59a zur Führung von Linearführungselementen 57a, beispielsweise Führungsstangen, einer Linearführung 20a. An der Vorderseite der Linearführungselemente 57a ist ein Sägeaggregat oder eine Sägeeinrichtung 11a um eine Kappschwenkachse 19 schwenkbar gelagert. Ein Halter 157a am vorderen Ende der Linearführungselemente 57a enthält ein Kappschwenklager 60a. Die Sägeeinrichtung 11a ist linear verschieblich und um die Kappschwenkachse 19 schwenkbar an dem Schwenkträger 48a angeordnet.

In der in Figur 7 dargestellten Linearposition 111a der Sägeeinrichtung 11a ist eine Linearbegrenzungseinrichtung 122a mit dem Halter 109 verbunden, so dass die Sägeeinrichtung 11a in dieser Linearposition 111a festgelegt ist. In der Linearposition 111a kann die Sägeeinrichtung 11a um einen größeren Kappschwenkwinkel 118 nach unten geschwenkt werden.

Ein Distanzelement 124a Linearbegrenzungseinrichtung 122a ist beispielsweise um eine Schwenkachse 155a verschwenkbar. In der nach oben geschwenkten Stellung steht ein Ende 149a des Distanzelementes 124a nach oben vor den Schwenkträger 48a vor.

Das Distanzelement 124a legt die Sägeeinrichtung 11a auf exakt eine einzige Linearposition 111a fest, bei der der zweite, größere Kappschwenkwinkel 118 einstellbar ist. Es ist aber auch denkbar, dass diese tiefere Kappstellung auch an weiteren Linearpositionen oder einem Linearbereich einstellbar ist.

So kann Sägeeinrichtung 11a z.B. in einem Verstellbereich 151a in die tiefere Kappstellung geschwenkt werden, wenn ein Distanzelement 150a zwischen den Schwenkträger 48a und den Halter 157a verstellt, beispielsweise geschwenkt oder linear verschoben, ist.

Ferner ist es denkbar, Distanzelemente 152a, 153a in Richtung der Linearführung 20a zu verstellen, so dass die Sägeeinrichtung 11a in einem Längs-Verstellbereich 154a in die tiefere Kappstellung gemäß Figur 2 verfahren werden kann. Der Halter 157a schlägt in seiner vorderen Stellung gegen das Distanzelement 153a an. In der hinteren Stellung der Sägeeinrichtung 11a schlägt mindestens eines der Linearführungselemente 57a an das Distanzelement 152a an.

## Patentansprüche

1. Kappsäge mit einer Sägeeinrichtung (11; 11a), die ein durch einen Antriebsmotor (13) antreibbares Sägeblatt (12) aufweist und zur Durchführung von Linearschnitten an einem Werkstück (15) an einem Sägeschlitten (58) angeordnet ist, wobei der Sägeschlitten (58) an einer an einem Träger angeordneten Linearführung (20; 20a) entlang einer Linearführungsachse (21) linear geführt ist, und wobei die Sägeeinrichtung (11; 11a) an dem Sägeschlitten (58) um eine Kappschwenkachse (19) um einen Kappschwenkwinkel (117, 118) schwenkbar gelagert ist, wobei die Säge eine Kappeinstelleinrichtung (110) zur Einstellung des Kappschwenkwinkels (117, 118) auf einen Maximalwert aufweist, **dadurch gekennzeichnet, dass** die Kappeinstelleinrichtung (110) den Kappschwenkwinkel (117, 118) in Abhängigkeit von einer Linearposition (111) des Sägeschlittens (58) auf einen ersten und mindestens einen zweiten maximalen Kappschwenkwinkel (117, 118) begrenzt.

2. Kappsäge nach Anspruch 1, **dadurch gekennzeichnet, dass** sie einen Vertikal-Anschlag (16) zum Anlegen des Werkstücks (15) aufweist, und dass die Kappeinstelleinrichtung (110) in Abhängigkeit von der Stellung des Sägeschlittens (58) zu dem Vertikal-Anschlag (16) einen größeren oder kleineren Kappschwenkwinkel (118) zulässt.

3. Kappsäge nach Anspruch 2, **dadurch gekennzeichnet, dass** die Kappeinstelleinrichtung (110) bei einer Stellung des Sägeschlittens (58) im Bereich des Vertikal-Anschlags (16) einen größeren Kappschwenkwinkel (118) als bei einer von dem Vertikal-Anschlag (16) entfernteren Stellung des Sägeschlittens (58) zulässt.

4. Kappsäge nach einem der vorhergehenden Ansprüche, **dadurch gekennzeichnet, dass** der Träger für die Linearführung (20; 20a) durch einen Schwenkträger (48; 48a) gebildet ist, der an einer Schrägschwenkbasis (46) um eine Schrägschwenkachse (18) schrägschwenkbar gelagert ist.

5. Kappsäge nach Anspruch 4, **dadurch gekennzeichnet, dass** die Kappeinstelleinrichtung (110) den Kappschwenkwinkel (117, 118) in Abhängigkeit von der Schrägschwenkstellung der Sägeeinrichtung (11; 11a) begrenzt und/oder die Schrägschwenkstellung der Sägeeinrichtung (11; 11a) in Abhängigkeit von dem Kappschwenkwinkel (117, 118) begrenzt.

6. Kappsäge nach einem der vorhergehenden Ansprüche, **dadurch gekennzeichnet, dass** die Kappeinstelleinrichtung (110) eine zwischen einer Linearfreigabestellung und einer Linearbegrenzungsstellung verstellbare Linearbegrenzungseinrichtung (122) zum Begrenzen einer Linearverstellung des Sägeschlittens (58) entlang der Linearführungsachse (21) aufweist.

7. Kappsäge nach Anspruch 6, **dadurch gekennzeichnet, dass** die Linearbegrenzungseinrichtung (122) in seiner Linearbegrenzungsstellung ein Verstellen des Sägeschlittens (58) auf eine maximal von dem Werkstück-Vertikal-Anschlag (16) entfernte Linearposition (111) und/oder eine minimal von dem Werkstück-Vertikal-Anschlag (16) entfernte Linearposition (111) begrenzt.

8. Kappsäge nach Anspruch 6 oder 7, **dadurch gekennzeichnet, dass** die Linearbegrenzungseinrichtung (122) mit dem Sägeschlitten (58) verbindbar und von dem Sägeschlitten (58) lösbar ist.

9. Kappsäge nach Anspruch 8, **dadurch gekennzeichnet, dass** die Linearbegrenzungseinrichtung (122) einen insbesondere hakenartigen Vorsprung zum Verbinden mit dem Sägeschlitten (58) aufweist.

10. Kappsäge nach Anspruch 8 oder 9, **dadurch gekennzeichnet, dass** die Linearbegrenzungseinrichtung (122) in Abhängigkeit von einer Schrägschwenkposition der Sägeeinrichtung (11; 11a) mit dem Sägeschlitten (58) verbindbar oder nicht verbindbar ist.

11. Kappsäge nach einem der Ansprüche 8 bis 10, **dadurch gekennzeichnet, dass** die Linearbegrenzungseinrichtung (122) nur im Bereich einer Vertikalstellung der Sägeeinrichtung (11; 11a) mit dem Sägeschlitten (58) verbindbar ist.

12. Kappsäge nach einem der vorhergehenden Ansprüche, **dadurch gekennzeichnet, dass** die Kappeinstelleinrichtung (110) zur Begrenzung des Kappschwenkwinkels (117, 118) einen Kappanschlag (127) aufweist, gegen den ein Anschlag (130) der Sägeeinrichtung (11; 11a) beim Schwenken in Richtung einer Kappstellung anschlägt, und dass der Kappanschlag (127) zumindest zwischen einer ersten, einen kleineren Kappschwenkwinkel (117) zulassenden Begrenzungsstellung und einer zweiten, einen größeren Kappschwenkwinkel (118) zulassenden Begrenzungsstellung verstellbar, insbesondere schwenkbar, ist.

13. Kappsäge nach Anspruch 12, **dadurch gekennzeichnet, dass** der Kappanschlag (127) und die Linearbegrenzungseinrichtung (122) sich wechselseitig beeinflussend verstellbar sind.

14. Kappsäge nach Anspruch 12 oder 13, **dadurch gekennzeichnet, dass** der Kappanschlag (127) nur in die zweite, einen größeren Kappschwenkwinkel (118) zulassende Begrenzungsstellung verstellbar ist, wenn die Linearbegrenzungseinrichtung (122) eine Linearverstellung des Sägeschlittens (58) auf die Längsposition begrenzt.

15. Kappsäge nach einem der Ansprüche 12 bis 14, **dadurch gekennzeichnet, dass** die Linearbegrenzungseinrichtung (122) nur mit dem Sägeschlitten (58) verbindbar ist, wenn der Kappanschlag (127) in die zweite, einen größeren Kappschwenkwinkel (118) zulassende Begrenzungsstellung verstellt ist.

16. Kappsäge nach einem der Ansprüche 6 bis 15, **dadurch gekennzeichnet, dass** die Linearbegrenzungseinrichtung (122) mit einer Blockieranordnung (136) gekoppelt ist, die in einer Schrägschwenk-Blockierstellung die Sägeeinrichtung (11; 11a) in einer vorbestimmten Schrägschwenkposition blockiert und in einer Schrägschwenk-Freigabestellung ein Schwenken der Sägeeinrichtung (11; 11a) zulässt.

17. Kappsäge nach Anspruch 16, **dadurch gekennzeichnet, dass** die Blockieranordnung (136) mit dem Kappanschlag (127) derart gekoppelt ist, dass der Kappanschlag (127) nur in die zweite, einen größeren Kappschwenkwinkel (117, 118) zulassende Begrenzungsstellung verstellbar ist, wenn die Linearbegrenzungseinrichtung (122) eine Linearverstellung des Sägeschlittens (58) auf die Längsposition begrenzt.

18. Kappsäge nach Anspruch 16 oder 17, **dadurch gekennzeichnet, dass** die Linearbegrenzungseinrichtung (122) bei einem Verstellen in ihre Linearbegrenzungsstellung die Blockieranordnung (136) in Richtung ihrer Schrägschwenk-Blockierstellung betätigt.

19. Kappsäge nach einem der vorhergehenden Ansprüche, **dadurch gekennzeichnet, dass** sie einen Werkstücktisch (30) mit einem Sägeschlitz (33) zum Auflegen des Werkstücks (15) aufweist, und dass eine Tiefe und/oder eine Breite des Sägeschlitzes (33) mit dem durch die Kappeinstelleinrichtung (110) einstellbaren maximalen Kappschwenkwinkel (117, 118) korreliert.

20. Kappsäge nach einem der vorhergehenden Ansprüche, **dadurch gekennzeichnet, dass** sie ein Gehäuse mit einer Aussparung (121) und/oder einem beweglichen Gehäuseteil (158) aufweist, das einen zum Bearbeiten des Werkstücks (15) bei dem größeren Kappschwenkwinkel (118) genutzten Bereich des Sägeblatts (12) freigibt.

## Claims

1. Chop saw with a saw unit (11; 11a) which has a saw blade (12) drivable by means of a drive motor (13) and mounted on a saw carriage (58) for the making of linear cuts in a workpiece (15), wherein the saw carriage (58) is guided linearly along a linear guide axis (21) on a linear guide (20; 20a) mounted on a support, and wherein the saw unit (11; 11a) is pivotably mounted on the saw carriage (58) around a cutting pivot axis (19) by a cutting pivot angle (117, 118), wherein the saw has a cut setting facility (110) for setting the cutting pivot angle (117, 118) to a maximum value, **characterised in that** the cut setting facility (110) limits the cutting pivot angle (117, 118) to a first and at least a second maximum cutting pivot angle (117, 118), depending on a linear position (111) of the saw carriage (58).

2. Chop saw according to claim 1, **characterised in that** is has a vertical stop (16) against which the workpiece (15) may be placed, and that the cut setting facility (110) permits a larger or smaller cutting pivot angle (118), depending on the position of the saw carriage (58) relative to the vertical stop (16).

3. Chop saw according to claim 2 **characterised in that,** with the saw carriage (58) in a position close to the vertical stop (16), the cut setting facility (110) permits a greater cutting pivot angle (118) than when the saw carriage (58) is further away from the vertical stop (16).

4. Chop saw according to any of the preceding claims, **characterised in that** the support for the linear guide (20; 20a) is formed by a pivoting support (48; 48a), which is mounted on a tilt-pivot base (46) with the facility to tilt-pivot around a tilt-pivot axis (18).

5. Chop saw according to claim 4, **characterised in that** the cut setting facility (110) limits the cutting pivot angle (117, 118) depending on the tilt-pivot position of the saw unit (11; 11a) and/or limits the tilt-pivot position of the saw unit (11; 11a) depending on the cutting pivot angle (117, 118).

6. Chop saw according to any of the preceding claims, **characterised in that** the cut setting facility (110) has a linear limiting device (122), adjustable between a linear release position and a linear limiting position, for limiting a linear adjustment of the saw carriage (58) along the linear guide axis (21).

7. Chop saw according to claim 6, **characterised in that** the linear limiting device (122), in its linear limiting position, limits adjustment of the saw carriage (58) to a maximum linear position (111) removed from the workpiece vertical stop (16) and/or a minimum linear position (111) removed from the workpiece vertical stop (16).

8. Chop saw according to claim 6 or 7, **characterised in that** the linear limiting device (122) is connectable to the saw carriage (58) and is releasable from the saw carriage (58).

9. Chop saw according to claim 8, **characterised in that** the linear limiting device (122) has a projection, in particular hook-like, for connection to the saw carriage (58).

10. Chop saw according to claim 8 or 9, **characterised in that** the linear limiting device (122) is connectable or not connectable to the saw carriage (58), depending on a tilt-pivot position of the saw unit (11; 11 a).

11. Chop saw according to any of claims 8 to 10, **characterised in that** the linear limiting device (122) is connectable to the saw carriage (58) only in the area of a vertical position of the saw unit (11; 11a).

12. Chop saw according to any of the preceding claims, **characterised in that** the cut setting facility (110) has a fence (127) to limit the cutting pivot angle (117, 118), against which a stop (130) of the saw unit (11; 11a) hits in pivoting in the direction of a cutting position, and that the fence (127) is adjustable, in particular pivotable, between a first limiting position permitting a smaller cutting pivot angle (117) and a second limiting position permitting a larger cutting pivot angle (118).

13. Chop saw according to claim 12, **characterised in that t**he fence (127) and the linear limiting device (122) are adjustable, each depending on the influence of the other.

14. Chop saw according to claim 12 or 13, **characterised in that** the fence (127) is adjustable into the second limiting position permitting a larger cutting pivot angle (118) only when the linear limiting device (122) limits linear adjustment of the saw carriage (58) to the longitudinal position.

15. Chop saw according to any of claims 12 to 14, **characterised in that** the linear limiting device (122) is connectable to the saw carriage (58) only when the fence (127) is adjusted into the second limiting position permitting a larger cutting pivot angle (118).

16. Chop saw according to any of claims 6 to 15, **characterised in that** the linear limiting device (122) is coupled to a locking arrangement (136) which, in a tilt-pivot locking position locks the saw unit (11; 11a) in a predetermined tilt-pivot position, and in a tilt-pivot release position allows pivoting of the saw unit (11; 11a).

17. Chop saw according to claim 16, **characterised in that** the locking arrangement (136) is coupled to the fence (127) in such a way that the fence (127) is adjustable into the second limiting position permitting a larger cutting pivot angle (117, 118) only if the linear limiting device (122) limits linear adjustment of the saw carriage (58) to the longitudinal position.

18. Chop saw according to claim 16 or 17 **characterised in that** the linear limiting device (122), on adjustment into its linear limiting position, actuates movement of the locking arrangement (136) into its tilt-pivot locking position.

19. Chop saw according to any of the preceding claims, **characterised in that** it has a worktable (30) with a sawing slot (33) on which the workpiece (15) may be placed, and that a depth and/or width dimension of the sawing slot (33) is correlated with the maximum cutting pivot angle (117, 118) which may be set by the cut setting facility (110).

20. Chop saw according to any of the preceding claims, **characterised in that** it has a housing with a recess (121) and/or a movable housing section (158) which releases an area of the saw blade (12) used for machining the workpiece (15) at the larger cutting pivot angle (118).

## Revendications

1. Scie à onglet avec un dispositif de sciage (11 ; 11a) qui présente une lame de scie (12) pouvant être entraînée par un moteur d'entraînement (13) et est disposée pour la réalisation de coupes linéaires sur une pièce à usiner (15) sur un chariot de sciage (58), dans laquelle le chariot de sciage (58) est guidé linéairement sur un guidage linéaire (20 ; 20a) disposé sur un support le long d'un axe de guidage linéaire (21), et dans laquelle le dispositif de sciage (11 ; 11a) est logé à pivotement sur le chariot de sciage (58) autour d'un axe de pivotement d'onglet (19) d'un angle de pivotement d'onglet (117, 118), dans laquelle la scie présente un dispositif de réglage d'onglet (110) pour le réglage de l'angle de pivotement d'onglet (117, 118) à une valeur maximale, **caractérisée en ce que** le dispositif de réglage d'onglet (110) limite l'angle de pivotement d'onglet (117, 118) en fonction d'une position linéaire (111) du chariot de sciage (58) à un premier et au moins un second angle de pivotement d'onglet (117, 118) maximal.

2. Scie à onglet selon la revendication 1, **caractérisée en ce qu'**elle présente une butée verticale (16) pour l'application de la pièce à usiner (15), et **en ce que** le dispositif de réglage d'onglet (110) autorise en fonction de la position du chariot de sciage (58) par rapport à la butée verticale (16) un angle de pivotement d'onglet (118) supérieur ou inférieur.

3. Scie à onglet selon la revendication 2, **caractérisée en ce que** le dispositif de réglage d'onglet (110) autorise en cas de position du chariot de sciage (58) dans la zone de la butée verticale (16) un angle de pivotement d'onglet (118) plus grand qu'en cas de position plus éloignée de la butée verticale (16) du chariot de sciage (58).

4. Scie à onglet selon l'une quelconque des revendications précédentes, **caractérisée en ce que** le support pour le guidage linéaire (20 ; 20a) est formé par un support pivotant (48 ; 48a) qui est logé à pivotement oblique sur une base de pivotement oblique (46) autour d'un axe de pivotement oblique (18).

5. Scie à onglet selon la revendication 4, **caractérisée en ce que** le dispositif de réglage d'onglet (110) limite l'angle de pivotement d'onglet (117 ; 118) en fonction de la position de pivotement oblique du dispositif de sciage (11 ; 11a) et/ou limite la position de pivotement oblique du dispositif de sciage (11 ; 11a) en fonction de l'angle de pivotement d'onglet (117 ; 118).

6. Scie à onglet selon l'une quelconque des revendications précédentes, **caractérisée en ce que** le dispositif de réglage d'onglet (110) présente un dispositif de limitation linéaire (122) réglable entre une position de libération linéaire et une position de limitation linéaire pour limiter un réglage linéaire du chariot de sciage (122) le long de l'axe de guidage linéaire (21).

7. Scie à onglet selon la revendication 6, **caractérisée en ce que** le dispositif de limitation linéaire (122) limite dans sa position de limitation linéaire un réglage du chariot de sciage (58) à une position linéaire (111) éloignée au maximum de la butée verticale de la pièce à usiner (16) et/ou une position linéaire éloignée au minimum de la butée verticale de la pièce à usiner (16).

8. Scie à onglet selon la revendication 6 ou 7, **caractérisée en ce que** le dispositif de limitation linéaire (122) peut être relié au chariot de sciage (58) et est amovible du chariot de sciage (58).

9. Scie à onglet selon la revendication 8, **caractérisée en ce que** le dispositif de limitation linéaire (122) présente une saillie en particulier de type crochet pour la liaison avec le chariot de sciage (58).

10. Scie à onglet selon la revendication 8 ou 9, **caractérisée en ce que** le dispositif de limitation linéaire (122) peut ou ne peut pas être relié en fonction d'une position de pivotement oblique du dispositif de sciage (11 ; 11a) au chariot de sciage (58).

11. Scie à onglet selon l'une quelconque des revendications 8 à 10, **caractérisée en ce que** le dispositif de limitation linéaire (122) peut être relié uniquement dans la zone d'une position verticale du dispositif de sciage (11 ; 11 a) au chariot de sciage (58).

12. Scie à onglet selon l'une quelconque des revendications précédentes, **caractérisée en ce que** le dispositif de réglage d'onglet (110) présente une butée d'onglet (127) pour la limitation de l'angle de pivotement d'onglet (117, 118), contre laquelle une butée (130) du dispositif de sciage (11 ; 11 a) bute lors du pivotement en direction d'une position d'onglet, et **en ce que** la butée d'onglet (127) est réglable, en particulier pivotante au moins entre une première position de limitation autorisant un angle de pivotement d'onglet inférieur (117) et une seconde position de limitation autorisant un angle de pivotement d'onglet supérieur (118).

13. Scie à onglet selon la revendication 12, **caractérisée en ce que** la butée d'onglet (127) et le dispositif de limitation linéaire (122) sont réglables de manière à s'influencer mutuellement.

14. Scie à onglet selon la revendication 12 ou 13, **caractérisée en ce que** la butée d'onglet (127) est réglable seulement dans la seconde position de limitation autorisant un angle de pivotement d'onglet (118) supérieur si le dispositif de limitation linéaire (122) limite un réglage linéaire du chariot de sciage (58) à la position longitudinale.

15. Scie à onglet selon l'une quelconque des revendications 12 à 14, **caractérisée en ce que** le dispositif de limitation linéaire (122) peut être relié uniquement au chariot de sciage (58) si la butée d'onglet (127) est réglée dans la seconde position de limitation autorisant un angle de pivotement d'onglet supérieur (118).

16. Scie à onglet selon l'une quelconque des revendications 6 à 15, **caractérisée en ce que** le dispositif de limitation linéaire (122) est couplé à un ensemble de blocage (136) qui bloque dans une position de blocage à pivotement oblique le dispositif de sciage (11 ; 11a) dans une position de pivotement oblique prédéterminée et autorise dans une position de libération à pivotement oblique un pivotement du dispositif de sciage (11 ; 11a).

17. Scie à onglet selon la revendication 16, **caractérisée en ce que** l'ensemble de blocage (136) est couplé à la butée d'onglet (127) de telle sorte que la butée d'onglet (127) ne soit réglable que dans la seconde position de limitation autorisant un angle de pivotement d'onglet (117, 118) supérieur si le dispositif de limitation linéaire (122) limite un réglage linéaire du chariot de sciage (58) à la position longitudinale.

18. Scie à onglet selon la revendication 16 ou 17, **caractérisée en ce que** le dispositif de limitation linéaire (122) actionne lors d'un réglage dans sa position de limitation linéaire l'ensemble de blocage (136) en direction de sa position de blocage à pivotement oblique.

19. Scie à onglet selon l'une quelconque des revendications précédentes, **caractérisée en ce qu'**elle présente une table porte-pièce (30) avec une voie de scie (33) pour poser la pièce à usiner (15), et **en ce qu'**une profondeur et/ou une largeur de la voie de scie (33) est en corrélation avec l'angle de pivotement d'onglet (117, 118) maximal réglable par le dispositif de réglage d'onglet (110).

20. Scie à onglet selon l'une quelconque des revendications précédentes, **caractérisée en ce qu'**elle présente un boîtier avec un évidement (121) et/ou une partie de boîtier (158) mobile qui libère une zone de la lame de scie (12) utilisée pour l'usinage de la pièce à usiner (15) en cas d'angle de pivotement d'onglet (118) supérieur.
